# EUROPÄISCHE PATENTSCHRIFT

(11) **EP 4 036 681 B1**
(45) Veröffentlichungstag und Bekanntmachung des Hinweises auf die Patenterteilung: **16.08.2023**
(21) Anmeldenummer: 22153082.7
(22) Anmeldetag: 25.01.2022
(51) Int. Cl.: G05D 23/19, F24D 19/10

(54) **VERFAHREN UND ANORDNUNG ZUR ERHÖHUNG DER TEMPERATUR IN MINDESTENS EINEM BEHEIZBAREN RAUM**
METHOD AND ASSEMBLY FOR INCREASING THE TEMPERATURE IN AT LEAST ONE HEATABLE CHAMBER
PROCÉDÉ ET AGENCEMENT D'AUGMENTATION DE LA TEMPÉRATURE DANS AU MOINS UNE PIÈCE CHAUFFÉE

(30) Priorität: 29.01.2021 DE 102021102070
(43) Veröffentlichungstag der Anmeldung: 03.08.2022
(73) Patentinhaber: Vaillant GmbH, 42859 Remscheid (DE)
(72) Erfinder: Löhr, Christoph, 42657 Solingen (DE); Pasquariello, Giosino, 40627 Düsseldorf (DE); Ebenfeld, Sven, 45525 Hattingen (DE)

(56) Entgegenhaltungen:
- EP-A2- 1 085 269
- EP-B1- 2 399 079
- DE-A1- 4 446 974
- DE-A1- 10 044 734

## Beschreibung

Die Erfindung betrifft ein Verfahren und eine Anordnung zur effizienten Erhöhung des Heizkomforts in einem Gebäude, insbesondere einem Gebäude mit mehreren beheizbaren Räumen. Dabei wird von einer beliebigen Heizanlage ausgegangen, die einen Wärmeerzeuger (z. B. ein Heizgerät) und mehrere Wärmeemitter (z. B. Radiatoren und/oder Fußbodenheizungen) aufweist.

Nach dem Stand der Technik werden die Wärmeemitter mit einem flüssigen Wärmeträgermedium (meist Wasser) mit einer vorgebbaren Vorlauftemperatur versorgt, wobei ein Vorlauftemperatursollwert des Wärmeerzeugers entweder über eine sogenannte Heizkurve aus der jeweiligen Außentemperatur berechnet oder bei Steuerungen ohne Informationen über die Außentemperatur von einem Nutzer dauerhaft festgelegt wird.

Zudem können Komfortzeitfenster während eines Tages vom Nutzer vorgegeben oder durch einen Algorithmus erlernt werden, in denen die Temperatur in den beheizbaren Räumen auf einer Komforttemperatur gehalten werden soll. In den übrigen Zeiträumen wird die Wärmeerzeugung gestoppt, was in der Regel zu einer Abkühlung der Räume führt, oder die Raumtemperatur wird auf einen Temperaturwert unterhalb der Komforttemperatur geregelt.

Bei einem Wechsel von einem Zeitraum mit abgesenkter Temperatur in einen Zeitraum mit Komforttemperatur gibt es zwei unterschiedliche Vorgehensweisen, die jeweils unterschiedliche Nachteile haben. Wenn die Vorlaufsolltemperatur zum Beginn des Komfortzeitfensters auf den vom Nutzer festgelegten Wert bzw. auf den nach der Heizkurven-Methode berechneten Wert gesetzt wird, ist die Zeitdauer bis zum Erreichen der Komforttemperatur relativ lang. Wird dieser Nachteil durch die Wahl einer höheren Heizkurve mit entsprechend höherer Vorlauftemperatur verringert, sinkt bei üblichen Wärmeerzeugern die Effizienz.

Bei einer zweiten alternativen Vorgehensweise wird der Beginn der Aufheizphase so weit vorgezogen, dass beim Wechsel zu einem Komfortzeitfenster die Komforttemperatur im Raum bereits erreicht ist. Dieses Vorgehen hat die Nachteile, dass die Raumtemperatur auch außerhalb der Komfortzeitfenster höher ist als notwendig und dass im Besonderen beim Beginn von Komfortzeitfenstern am Morgen eine Startphase des Wärmeerzeugers in der Nachtzeit erfolgt und dabei unerwünschte Geräuschemissionen entstehen können.

Die EP 2 399 079 A2 ist auf ein Verfahren zur Steuerung einer Fußbodenheizung gerichtet.

Aus der DE 44 46 974 A1 ist ein Verfahren zur raschen Aufheizung eines Raumes bekannt.

Die DE 100 44 734 A1 und die EP 1 085 269 A2 sind jeweils auf eine Anordnung zur Anpassung der Leistung eines Heizgerätes an den tatsächlichen Wärmebedarf, insbesondere eines Gebäudes, gerichtet.

Aufgabe der vorliegenden Erfindung ist es, die mit Bezug auf den Stand der Technik geschilderten Probleme wenigstens teilweise zu verringern. Insbesondere wird die Schaffung eines Verfahrens und einer Anordnung angestrebt, mit denen das Erreichen einer Komforttemperatur in einem Komfortzeitfenster effizient und schneller als nach dem Stand der Technik möglich ist.

Zur Lösung dieser Aufgabe dienen ein Verfahren und eine Anordnung sowie ein Computerprogrammprodukt gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit der Zeichnung, veranschaulicht die Erfindung und gibt weitere Ausführungsbeispiele an.

Hierzu trägt ein Verfahren bei zur Erhöhung der Temperatur in mindestens einem beheizbaren Raum mit mindestens einem Wärmeemitter von einer abgesenkten Temperatur zu einer Komforttemperatur, wobei eine für einen Normalbetrieb vorgegebene, von einem Wärmeerzeuger bereitgestellte Vorlauftemperatur eines Wärmeträgermediums um einen vorgebbaren Wert oder auf eine Maximaltemperatur angehoben und bei Erreichen der Komforttemperatur in dem Raum oder nach Ablauf eines vorgebbaren Zeitintervalls wieder auf die für den Normalbetrieb vorgegebene Temperatur abgesenkt wird.

Die Komforttemperatur kann vom Benutzer des beheizbaren Raums vorgegeben bzw. eingestellt und/oder von einer Regeleinheit angepasst werden. Die Komforttemperatur kann ein individuell einstellbarer oder erlernbarer Temperaturwert sein, der - ggf. in Abhängigkeit von der Außentemperatur, Tages- oder Jahreszeit - vom Benutzer des Raums als angenehm empfunden wird. Liegt die tatsächliche Temperatur im Raum unterhalb dieser Komforttemperatur, wird hier von einer abgesenkten bzw. niedrigeren Temperatur gesprochen, ohne dass das zwingend verlangt ist. Eine abgesenkte Temperatur kann beim Start des Betriebs des Wärmeemitters oder auch im laufenden Betrieb (beispielsweise nach einer Unterbrechung des Heizbetriebes für die Bereitstellung von warmem Trinkwasser) auftreten. Die abgesenkte Temperatur kann beispielsweise mindestens 2°C oder sogar mindestens 4°C kleiner als die Komforttemperatur sein. Die Vorlauftemperatur bezeichnet die Temperatur des Wärmeträgermediums, mit der dieses dem Wärmeemitter zugeführt bzw. bereitgestellt wird. Die Vorlauftemperatur im Normalbetrieb kann für ein flüssiges Wärmeträgermedium (wie Wasser) beispielsweise im Bereich von 55°C bis 65°C liegen, insbesondere bei ca. 60°C (vorgegebene Temperatur im Normalbetrieb). Der vorgebbare Wert der Erhöhung der Vorlauftemperatur kann mindestens 5°C betragen und liegt insbesondere im Bereich von ca. 10°C bis 20°C. Eine Maximaltemperatur des Wärmeträgermediums liegt insbesondere dann vor, wenn etwa die (aktuell) maximale, systembedingte Wärmemenge in das Wärmeträgermedium eingebracht wird. Die Vorlauftemperatur kann selbst geregelt werden, so dass hier vereinfacht von einer Vorlauftemperatur gesprochen wird, wenn es genau genommen um den Sollwert einer geregelten Vorlauftemperatur geht. Die Einstellung der für den Normalbetrieb vorgegebene Temperatur der Vorlauftemperatur kann (unmittelbar) zum Zeitpunkt des Erreichens der Komforttemperatur und/oder nach Ablauf eines vorgebbaren Zeitintervalls ausgehend von der Erhöhung der Vorlauftemperatur und/oder dem Zeitpunkt des Erreichens der Komforttemperatur erfolgen. Der Zeitraum des Betriebs mit erhöhter Vorlauftemperatur kann beispielsweise mehr als 15 min, mehr als 30 min oder sogar mehr als 60 min betragen, wobei diese Werte natürlich von den tatsächlichen Temperaturen, Wärmeemittern und räumlichen Bedingungen abhängig sind. In vielen Anwendungen wird dieser Zeitraum des Betriebs mit erhöhter Vorlauftemperatur nicht länger als 2 Stunden oder sogar nur 1 Stunde betragen.

Das Problem der langen Aufheizphase wird also insbesondere dadurch gelöst, dass die Übertragungsleistung der Wärmeemitter (temporär bzw. vorbestimmt) erhöht wird, indem die Vorlauftemperatur in der Aufheizphase erhöht wird. Die Aufheizphase ist hierbei der Zeitraum zwischen dem Beginn eines Komfortzeitfensters bzw. der Erhöhung des Raumtemperatursollwertes und des danach folgenden erstmaligen Erreichens der Raumsolltemperatur. Der Wärmeerzeuger kann im Allgemeinen diese erhöhte Leistung bereitstellen, weil Wärmeerzeuger für Raumheizungsanlagen in der Regel (bzw. im Normalbetrieb) auf die niedrigsten zu erwartenden Außentemperaturen plus einem Sicherheitsaufschlag ausgelegt werden.

Wenn mehrere unabhängig voneinander beheizbare Räume oder Gruppen von Räumen mit einer Einzelregelung vorhanden sind, erfolgt bevorzugt die Erhöhung der Temperatur in den Räumen oder Gruppen von Räumen nacheinander nach einer Prioritätenliste, und die Vorlauftemperatur wird erst nach Erreichen der Komforttemperatur in allen Räumen oder Gruppen von Räumen auf der Prioritätenliste oder nach einem geeigneten vorgebbaren Zeitintervall wieder abgesenkt.

In Systemen mit sogenannter Einzelraumregelung, die über Raumtemperatursensoren und elektrisch steuerbare Thermostatventile in jedem Raum bzw. in jeder Gruppe von Räumen (Heiz-Zone) verfügen, die zusätzlich von einer Steuer- und Regeleinheit ausgelesen bzw. angesteuert werden können, kann diese Verbesserung auch zusätzlich angewendet werden.

In dem Fall, dass die zur Verfügung stehende Heizleistung des Wärmeerzeugers für eine zusätzliche Aufheizleistung zu gering bemessen ist (dies ist regelmäßig der Fall, in Bestandssystemen, in denen eine Wärmepumpe mit elektrischem Nachheizgerät eingebaut worden ist), kann die Aufheizzeit dennoch verkürzt werden. Dazu wird einem oder mehreren Räumen bzw. Zonen durch das Schließen der betreffenden Ventile keine Wärme zugeführt, und die Ventile der Räume und Zonen die beschleunigt aufgeheizt werden sollen, werden voll aufgefahren und erhalten so die volle zur Verfügung stehende Heizleistung zugeteilt. Dies lässt sich mit oder ohne Erhöhung der Vorlauftemperatur durchführen.

Besonders bevorzugt kann ein vorgezogener Startzeitpunkt der Erhöhung der Temperatur bei vorgegebenem Zeitpunkt zum Erreichen der Komforttemperatur in Abhängigkeit von der Differenz zwischen abgesenkter Temperatur und Komforttemperatur und von einer möglichen Erhöhung der Vorlauftemperatur berechnet oder nach Erfahrungswerten geschätzt werden. Je nach der Art, wie die Komfortzeitfenster definiert sind, kann es vorteilhaft sein zu wissen, wie lange es etwa bis zum Erreichen der Komforttemperatur dauern wird, um entweder das Zeitfenster entsprechend vorzuverlegen oder aber rechtzeitig vor Beginn des Zeitfensters mit einer Temperaturerhöhung beginnen zu können. Da z. B. bei niedrigen Außentemperaturen die Vorlauftemperatur im Normalbetrieb schon recht hoch sein kann, steht für eine Erhöhung nicht so viel Spielraum zur Verfügung wie bei höherer Außentemperatur. Auch kann das Aufheizen von Räumen bei niedrigeren Außentemperaturen länger dauern, was durch einen vorgezogenen Startzeitpunkt berücksichtigt werden kann.

Zur Lösung der Aufgabe dient auch eine Anordnung zur Erhöhung der Temperatur in mindestens einem beheizbaren Raum mit mindestens einem Wärmeemitter von einer abgesenkten Temperatur zu einer Komforttemperatur, wobei ein Wärmeerzeuger zur Bereitstellung eines Wärmeträgermediums mit einer Vorlauftemperatur zur Durchströmung des Wärmeemitters vorhanden ist und wobei eine Steuer- und Regeleinheit vorhanden ist, die eingerichtet ist, die Vorlauftemperatur um einen vorgebbaren Wert oder auf eine Maximaltemperatur anzuheben und bei Erreichen der Komforttemperatur in dem Raum oder nach Ablauf eines vorgebbaren Zeitintervalls wieder auf die für den Normalbetrieb vorgegebene Temperatur abzusenken.

Bei mehreren beheizbaren Räumen oder Gruppen von Räumen mit jeweils einzeln ansteuerbaren Ventilen für deren jeweilige Wärmeemitter ist die Steuer- und Regeleinheit eingerichtet, die Ventile der Räume oder der Gruppen von Räumen nacheinander gemäß einer Prioritätenliste so anzusteuern, dass die Räume nacheinander auf Komforttemperatur gebracht werden, wobei die Vorlauftemperatur zumindest während eines Teils dieses Vorganges angehoben bleibt. Dies kann dadurch erreicht werden, dass ein geeignetes Zeitintervall für die Anhebung der Vorlauftemperatur vorgegeben wird oder durch Absenken der Vorlauftemperatur, wenn im letzten Raum der Prioritätenliste die Komforttemperatur erreicht ist.

Ein weiterer Aspekt betrifft auch ein Computerprogramprodukt umfassend Befehle, die bewirken, dass die beschriebene Anordnung das beschriebene Verfahren ausführt. Die Durchführung des Verfahrens und die Speicherung von Komfortzeitfenstern und deren Ausführung benötigen ein Programm und Daten für die Steuerung des Wärmeerzeugers und von Ventilen, wobei beides gelegentlich aktualisiert werden muss.

Die Erläuterungen zum Verfahren können zur näheren Charakterisierung der Anordnung herangezogen werden, und umgekehrt. Die Anordnung kann auch so eingerichtet sein, dass damit das Verfahren durchgeführt wird.

Ein schematisches Ausführungsbeispiel der Erfindung, auf das diese jedoch nicht beschränkt ist, und die Funktionsweise des Verfahrens werden nun anhand der Zeichnung näher erläutert. Es stellt dar:

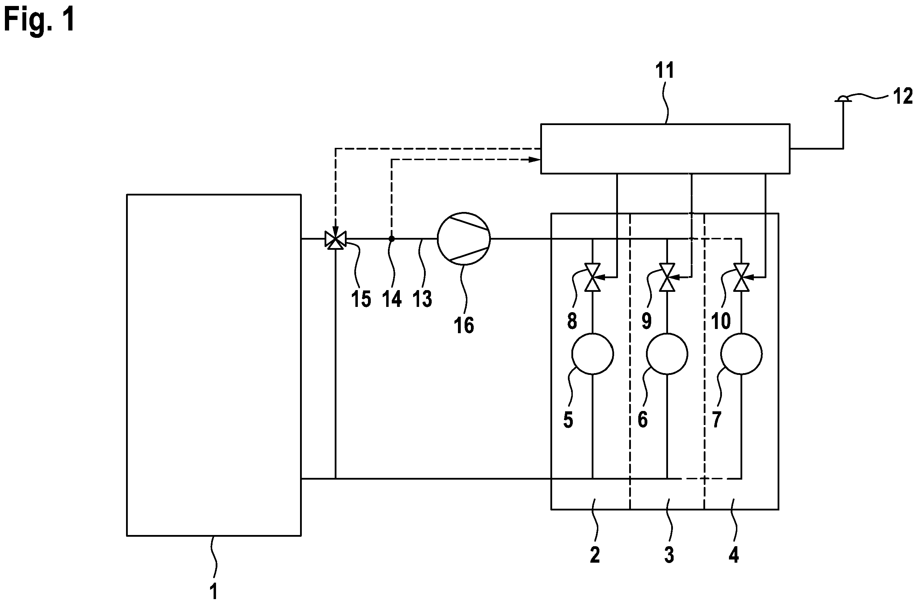

- Fig. 1:: eine Heizungsanlage mit Wärmeerzeuger und Wärmeemittern.

Fig. 1 zeigt schematisch eine Heizungsanlage für ein Gebäude mit einem ersten 2, einem zweiten 3 und einem dritten 4 Raum, wobei auch mehr Räume oder Gruppen von gemeinsam geschalteten Räumen vorhanden sein können. Jeder Raum hat mindestens einen Wärmeemitter 5, 6, 7, wobei diese im dargestellten Beispiel einzeln geregelt werden können (Einzelraumregelung). Dazu ist der erste Wärmeemitter 5 mit einem ersten Ventil 8, der zweite Wärmeemitter 6 mit einem zweiten Ventil 9 und der dritte Wärmeemitter 7 mit einem dritten Ventil 10 ausgestattet, wobei alle Ventile 8, 9, 10 von einer Steuer- und Regeleinheit 11 ansteuerbar sind. Die Steuer- und Regeleinheit 11 regelt die gesamte Anlage, insbesondere einen Wärmeerzeuger 1, der ein Wärmeträgermedium mit einer Vorlauftemperatur bereitstellt, welches von eine Vorlaufleitung 13 mittels einer Pumpe 16 durch die Wärmeemitter 5, 6, 7 transportiert wird.

Die Vorlauftemperatur wird von der Steuer- und Regeleinheit 11 geregelt, beispielsweise mittels eines Dreiwegeventils 15 oder durch andere Maßnahmen innerhalb des Wärmeerzeugers 1. Mit einem Vorlauftemperatursensor 14 wird die Vorlauftemperatur gemessen und von der Steuer- und Regeleinheit 11 auf einen Sollwert eingeregelt. Ein Sollwert für die Vorlauftemperatur wird im normalen Betrieb entweder anhand einer von einem Außentemperatursensor 12 gemessenen Außentemperatur aus einer gespeicherten Kurvenschar ermittelt oder anderweitig von einem Nutzer festgelegt. Im Allgemeinen wird dieser Sollwert so ermittelt oder festgelegt, dass eine möglichst effiziente Betriebsweise der Anlage erreicht wird, weshalb dauerhafte Änderungen dieses Sollwertes vermieden werden sollen.

Bei einem gewünschten schnellen Aufheizvorgang von einer abgesenkten Raumtemperatur zu einer Komforttemperatur wird die Vorlauftemperatur (bzw. deren Sollwert) erhöht, was entweder um einen vorgebbaren Betrag geschehen kann oder auf einen vorgebbaren Maximalwert. Die Erhöhung kann für ein vorgebbares (z. B. aus Erfahrungswerten bestimmtes) Zeitintervall beibehalten werden, was besonders dann sinnvoll ist, wenn die Raumtemperaturen der Steuer- und Regeleinheit 11 nicht zur Verfügung stehen. Wenn die Raumtemperaturen der Steuer- und Regeleinheit 11 zur Verfügung stehen, wird die Vorlauftemperatur wieder abgesenkt, wenn die Komforttemperatur in jedem Raum erreicht ist.

Bei einer Einzelraumregelung, wie sie hier dargestellt ist, kann alternativ (also ohne Änderung der Vorlauftemperatur) oder additiv eine Prioritätenliste festgelegt werden, nach der die einzelnen Räume 2, 3, 4 nacheinander aufgeheizt werden (z. B. morgens erst das Badezimmer, dann die Küche, dann das Wohnzimmer einer Wohnung). Dies wird durch entsprechende Ansteuerung der Ventile 8, 9, 10 erreicht, so dass ein schnelles Aufheizen in einer vorgebbaren Reihenfolge möglich ist. Insbesondere bewirkt das Schließen von Ventilen für erst später aufzuheizende Räume, dass zuerst angesteuerte Wärmeemitter die gesamte Wärme des Wärmeerzeugers 1 erhalten und möglicherweise auch einen größeren Durchfluss an Wärmeträgermedium, was beides die Aufheizung beschleunigt, insbesondere bei angehobener Vorlauftemperatur.

Insgesamt kann eine solche Heizungsanlage in mindestens drei prinzipiellen Varianten betrieben werden, um die Temperatur in beheizbaren Räumen zu gewünschten Zeitpunkten möglichst schnell und/oder in einer Reihenfolge nach einer Prioritätenliste auf eine Komforttemperatur zu bringen.

Variante I (unabhängig von einer Einzelraumregelung):
1. Zeitpunkt für die Erhöhung auf die gewünschte Komforttemperatur ermitteln,
2. Vorlauftemperatur über die Vorlauftemperatur im Normalbetrieb anheben,
3. System mit der in Schritt 2 gewählten Vorlauftemperatur betreiben,
4. nach einer zu definierenden Zeit abhängig vom System oder nach Erreichen der Wunschtemperatur, wird die angehobene Vorlauftemperatur auf die sonst eingestellte und /oder aus einer Heizkurve berechnete Vorlauftemperatur abgesenkt.

Variante II (mit einer Einzelraumregelung ohne Anhebung der Vorlauftemperatur):
1. Zeitpunkt für die Erhöhung auf die gewünschte Komforttemperatur ermitteln,
2. Ventile / Heizkreise der nicht bevorzugten Räume schließen,
3. Ventile / Heizkreise der Vorzugsräume öffnen (evtl. auch nach Prioritäten),
4. nach einer zu definierenden Zeit oder nach Erreichen der Wunschtemperatur, werden auch die Ventile nicht bevorzugter Räume / Heizkreise geöffnet.

Variante III (Kombination aus Variante I und Variante II)
1. Zeitpunkt für die Erhöhung auf die gewünschte Komforttemperatur ermitteln,
2. Vorlauftemperatur über die Vorlauftemperatur im Normalbetrieb anheben,
3. System mit der zuvor gewählten Vorlauftemperatur betreiben,
4. Heizungsventile / Heizkreise der nicht bevorzugten Räume schließen,
5. Heizungsventile / Heizkreise der Vorzugsräume öffnen (evtl. auch nach Prioritäten),
6. nach einer zu definierenden Zeit oder nach Erreichen der gewünschten Komforttemperatur, werden auch die Ventile nicht bevorzugter Räume / Heizkreise geöffnet, zudem wird die angehobene Vorlauftemperatur auf die sonst eingestellte und/oder aus einer Heizkurve berechnete Vorlauftemperatur abgesenkt.

Die vorliegende Erfindung erlaubt es, schnell die Temperatur in einem oder mehreren beheizbaren Räumen von einer abgesenkten Temperatur auf eine Komforttemperatur anzuheben, ohne dabei die Effizienz einer Heizanlage beim Normalbetrieb zu reduzieren.

### Bezugszeichenliste

- 1: Wärmeerzeuger (Heizgerät)
- 2: Erster Raum
- 3: Zweiter Raum
- 4: Dritter Raum
- 5: Erster Wärmeemitter
- 6: Zweiter Wärmeemitter
- 7: Dritter Wärmeemitter
- 8: Erstes Ventil
- 9: Zweites Ventil
- 10: Drittes Ventil
- 11: Steuer- und Regeleinheit
- 12: Außentemperatursensor
- 13: Vorlaufleitung
- 14: Vorlauftemperatursensor
- 15: Dreiwegeventil
- 16: Pumpe

## Patentansprüche

1. Verfahren zur Erhöhung der Temperatur in mindestens einem beheizbaren Raum (2, 3, 4) mit mindestens einem Wärmeemitter (5, 6, 7) von einer abgesenkten Temperatur zu einer Komforttemperatur, wobei eine für einen Normalbetrieb vorgegebene, von einem Wärmeerzeuger (1) bereitgestellte Vorlauftemperatur um einen vorgebbaren Wert oder auf eine Maximaltemperatur angehoben und bei Erreichen der Komforttemperatur in dem Raum (2, 3, 4) oder nach Ablauf eines vorgebbaren Zeitintervalls wieder auf die für den Normalbetrieb vorgegebene Temperatur abgesenkt wird; **dadurch gekennzeichnet, dass** mehrere unabhängig voneinander beheizbare Räume (2, 3, 4) oder Gruppen von Räumen (2, 3, 4) mit einer Einzelregelung von Ventilen (8, 9, 10) vorhanden sind und wobei die Erhöhung der Temperatur in den Räumen (2, 3, 4) oder Gruppen von Räumen (2, 3, 4) nacheinander nach einer Prioritätenliste erfolgt und die Vorlauftemperatur erst nach Erreichen der Komforttemperatur in allen Räumen (2, 3 4) oder Gruppen von Räumen (2, 3, 4) auf der Prioritätenliste oder nach Ablauf eines vorgebbaren Zeitintervalls wieder abgesenkt wird.

2. Verfahren nach Anspruch 1, wobei ein vorgezogener Startzeitpunkt der Erhöhung der Temperatur bei vorgegebenem Zeitpunkt zum Erreichen der Komforttemperatur in Abhängigkeit von der Differenz zwischen abgesenkter Temperatur und Komforttemperatur und von einer möglichen Erhöhung der Vorlauftemperatur berechnet oder nach Erfahrungswerten geschätzt wird.

3. Anordnung zur Erhöhung der Temperatur in mindestens einem beheizbaren Raum (2, 3, 4) mit mindestens einem Wärmeemitter (5, 6 7) von einer abgesenkten Temperatur zu einer Komforttemperatur, wobei ein Wärmeerzeuger (1) zur Bereitstellung eines Wärmeträgermediums mit einer Vorlauftemperatur zur Durchströmung des Wärmeemitters (5, 6, 7) vorhanden ist und wobei eine Steuer- und Regeleinheit (11) vorhanden ist, die eingerichtet ist, die Vorlauftemperatur um einen vorgebbaren Wert oder auf eine Maximaltemperatur anzuheben und bei Erreichen der Komforttemperatur in dem Raum oder nach Ablauf eines vorgebbaren Zeitintervalls wieder auf die für den Normalbetrieb vorgegebene Temperatur abzusenken; **dadurch gekennzeichnet, dass** mehrere beheizbare Räume (2, 3, 4) oder Gruppen von Räumen (2, 3, 4) mit jeweils einzeln ansteuerbaren Ventilen (8, 9, 10) für deren jeweilige Wärmeemitter (5, 6, 7) vorhanden sind, wobei die Steuer- und Regeleinheit (11) eingerichtet ist, die Ventile (8, 9, 10) der Räume (2, 3, 4) oder Gruppen von Räumen (2, 3, 4) nacheinander gemäß einer Prioritätenliste so anzusteuern, dass diese Räume (2, 3, 4) nacheinander auf Komforttemperatur gebracht werden, und wobei die Vorlauftemperatur zumindest während eines Teils dieses Vorganges angehoben bleibt.

4. Computerprogramprodukt umfassend Befehle, die bewirken, dass die Anordnung nach Anspruch 3 das Verfahren nach einem der Ansprüche 1 und 2 ausführt.

## Claims

1. Method for increasing the temperature in at least one heatable room (2, 3, 4) with at least one heat emitter (5, 6, 7) from a lowered temperature to a comfort temperature, wherein a flow temperature predefined for normal operation and provided by a heat generator (1) is raised by a predefinable value or to a maximum temperature and, when the comfort temperature has been reached in the room (2, 3, 4) or after a predefinable time interval has elapsed, is lowered again to the temperature predefined for normal operation; **characterised in that** a plurality of independently heatable rooms (2, 3, 4) or groups of rooms (2, 3, 4) are present with individual regulation of valves (8, 9, 10) and wherein the increase in temperature in the rooms (2, 3, 4) or groups of rooms (2, 3, 4) takes place successively according to a priority list and the flow temperature is only lowered again after the comfort temperature has been reached in all rooms (2, 3, 4) or groups of rooms (2, 3, 4) on the priority list or after a predefinable time interval has elapsed.

2. Method according to claim 1, wherein an early start time of the increase in temperature at a predefined time for reaching the comfort temperature is calculated depending on the difference between lowered temperature and comfort temperature and on a possible increase in the flow temperature or is estimated according to empirical values.

3. Arrangement for raising the temperature in at least one heatable room (2, 3, 4) with at least one heat emitter (5, 6, 7) from a lowered temperature to a comfort temperature, wherein a heat generator (1) is present for providing a heat transfer medium at a flow temperature for flowing through the heat emitter (5, 6, 7) and wherein a control and regulating unit (11) is present which is configured to raise the flow temperature by a predefinable value or to a maximum temperature and, after the comfort temperature has been reached in the room or after a predefinable time interval has elapsed, to lower said flow temperature again to the temperature predefined for normal operation; **characterised in that** a plurality of heatable rooms (2, 3, 4) or groups of rooms (2, 3, 4), each with individually actuable valves (8, 9, 10) for their respective heat emitters (5, 6, 7), are present, wherein the control and regulating unit (11) is configured to actuate the valves (8, 9, 10) of the rooms (2, 3, 4) or groups of rooms (2, 3, 4) successively according to a priority list in such a way that these rooms (2, 3, 4) are successively brought to comfort temperature, and wherein the flow temperature remains raised during at least a portion of this process.

4. Computer program product comprising instructions that cause the arrangement according to claim 3 to perform the method according to any one of claims 1 and 2.

## Revendications

1. Procédé pour augmenter la température dans au moins une pièce (2, 3, 4) pouvant être chauffée avec au moins un émetteur de chaleur (5, 6, 7) d'une température abaissée à une température de confort, dans lequel une température de départ prédéfinie pour un fonctionnement normal et mise à disposition par un générateur de chaleur (1) est augmentée d'une valeur pouvant être prédéfinie ou à une température maximale et est à nouveau abaissée à la température prédéfinie pour le fonctionnement normal lorsque la température de confort est atteinte dans la pièce (2, 3, 4) ou après l'écoulement d'un intervalle de temps pouvant être prédéfini ; **caractérisé en ce que** plusieurs pièces (2, 3, 4) ou groupes de pièces (2, 3, 4) pouvant être chauffés indépendamment les uns des autres sont présents avec une régulation individuelle de vannes (8, 9, 10) et dans lequel l'augmentation de la température dans les pièces (2, 3, 4) ou groupes de pièces (2, 3, 4) s'effectue successivement selon une liste de priorités et la température de départ n'est à nouveau abaissée que lorsque la température de confort est atteinte dans toutes les pièces (2, 3 4) ou groupes de pièces (2, 3, 4) figurant sur la liste de priorités ou après l'écoulement d'un intervalle de temps pouvant être prédéfini.

2. Procédé selon la revendication 1, dans lequel un instant de départ anticipé de l'augmentation de la température est calculé ou estimé selon des valeurs empiriques, pour un instant prédéfini pour atteindre la température de confort, en fonction de la différence entre la température abaissée et la température de confort et d'une éventuelle augmentation de la température de départ.

3. Agencement pour augmenter la température dans au moins une pièce (2, 3, 4) pouvant être chauffée avec au moins un émetteur de chaleur (5, 6, 7) d'une température abaissée à une température de confort, dans lequel est présent un générateur de chaleur (1) pour la mise à disposition d'un fluide caloporteur avec une température de départ pour la circulation à travers l'émetteur de chaleur (5, 6, 7) et dans lequel est présente une unité de commande et de régulation (11) qui est conçue pour augmenter la température de départ d'une valeur pouvant être prédéfinie ou à une température maximale et pour l'abaisser à nouveau à la température prédéfinie pour le fonctionnement normal lorsque la température de confort est atteinte dans la pièce ou après écoulement d'un intervalle de temps pouvant être prédéfini ; **caractérisé en ce que** plusieurs pièces (2, 3, 4) ou groupes de pièces (2, 3, 4) pouvant être chauffés avec respectivement des vannes (8, 9, 10) pouvant être commandées individuellement pour leurs émetteurs de chaleur (5, 6, 7) respectifs sont présentes, dans lequel l'unité de commande et de régulation (11) est conçue pour commander les vannes (8, 9, 10) des pièces (2, 3, 4) ou des groupes de pièces (2, 3, 4) l'une après l'autre selon une liste de priorités de sorte que ces pièces (2, 3, 4) soient amenées l'une après l'autre à la température de confort, et dans lequel la température de départ reste élevée au moins pendant une partie de ce processus.

4. Produit de programme informatique comprenant des instructions qui amènent l'agencement selon la revendication 3 à exécuter le procédé selon l'une quelconque des revendications 1 et 2.
